(19) Europäisches Patentamt
European Patent Office
Office européen des brevets

(11) Publication number: 0 179 474
A2

(12) # EUROPEAN PATENT APPLICATION

(21) Application number: 85113532.7

(22) Date of filing: 24.10.85

(51) Int. Cl.⁴: B 01 D 13/04

(30) Priority: 24.10.84 US 664312
15.08.85 US 765799

(43) Date of publication of application:
30.04.86 Bulletin 86/18

(84) Designated Contracting States:
DE FR GB IT

(71) Applicant: E.I. DU PONT DE NEMOURS AND COMPANY
1007 Market Street
Wilmington Delaware 19898(US)

(72) Inventor: Manos, Philip
215 Waverly Road
Wilmington Delaware 19803(US)

(74) Representative: Abitz, Walter, Dr.-Ing. et al,
Abitz, Morf, Gritschneder, Freiherr von Wittgenstein
Postfach 86 01 09
D-8000 München 86(DE)

(54) **Gas separation membrane and process for preparing it.**

(57) A gas separation membrane and its preparation is disclosed. The membrane is an aromatic polyamide or amide-like polymer which has been treated with a dilute solution of a cationic surfactant in a volatile non-polar organic solvent.

EP 0 179 474 A2

TITLE

# GAS SEPARATION MEMBRANE AND PROCESS FOR PREPARING IT

0179474

## BACKGROUND OF THE INVENTION

### Field of the Invention

The present invention relates to a process of preparing a gas separation membrane, and the resulting membrane. The membrane is a surface modified aromatic polyamide, polyhydrazide or related amide-like polymeric membrane.

### Prior Art

U.S. 4,080,743; U.S. 4,080,744 and U.S. 4,120,098 disclose dried assymmetrically porous polyamide membranes suitable for use in the separation of gases.

U.S. 4,230,463 discloses gas separation membranes formed by coating a porous polymeric substrate.

### Summary of the Invention

The gas separation membranes of the present invention are prepared by drying an aromatic polyamide or amide-like membrane prepared as described in U.S. 3,567,632 using the drying process of any one of U.S. 4,080,743; U.S. 4,080,744 or U.S. 4,120,098. The dried membrane is treated with a very dilute solution of a cationic agent in a non-polar, volatile organic solvent having a low surface tension. The resulting membranes exhibit improved selectivity in separating mixtures of gases.

### Detailed Description

The polymers useful in preparing the membranes of the present invention contain repeating

114-A

units of the formula {A-B} where -A- is an aromatic moiety of the structure

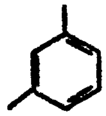 , 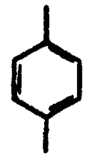 , 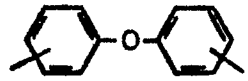

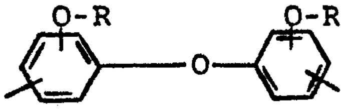 , 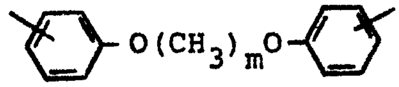

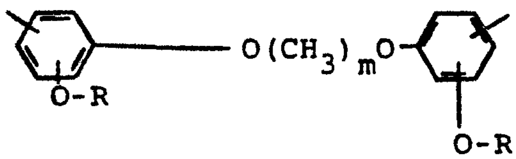 , 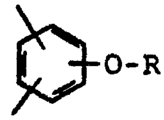

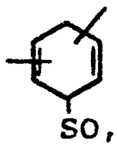 , cation 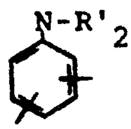 , 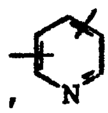 , 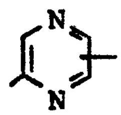 , 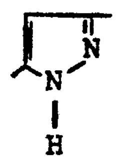

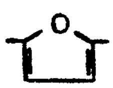 , 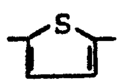 , 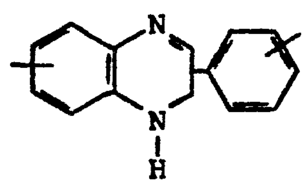 , or

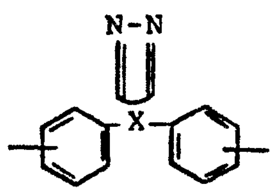

where X is O, S,

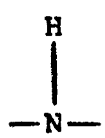

N alkyl, N phenyl and mixtures of the above, -R is an alkyl group containing 1 to 5 carbon atoms, -R' is -H or an alkyl group containing 1 to 5 carbon atoms, and n and m are 1-3; and -B- is a linking group of the structure

```
 H O     O H H O    H O H H O
 ' "     " ' ' "    ' " ' ' "
-N-C-, -C-N-N-C-, -N-C-N-N-C-,

 O H H O O H H O    H O O H H O     O H H O H
 " ' ' " " ' ' "    ' " " ' ' "     " ' ' " '
-C-N-N-C-C-N-N-C,   N-C-C-N-N-C-, -C-N-N-C-N-, or

 H O H
 ' " '
-N-C-N-.
```

It is to be understood that the various -B- groups listed include their mirror images. Thus

```
 H O                            H O       O H
 ' "                            ' "       " '
-N-C is intended to include -N-C- and -C-N- groups.
```

These polymers are more fully described in Richter et al. U.S. 3,567,632 the disclosure of which is hereby incorporated by reference. Of these the cast polyamide films derived from mixtures of terephthaloyl chloride and isophthaloyl chloride and meta-phenylenediamine are preferred. The meta-phenylenediamine may be substituted partially or fully with a sulfonic acid group. Generally the amount of sulfur present as sulfonic acid groups will vary from 0 to 4.5 wt % with from 1.5 to 3.8 wt % being preferred. Generally the ratio of isophthalyl chloride to terephthalyl chloride is from about 50:50 to 80:20. Generally the polyamide membrane is formed by casting a solution of the aromatic polyamide in a polar organic solvent, such as dimethylacetamide, onto a casting surface or support fabric, evaporating some of the surface of the resulting layer of aromatic polyamide and then quenching with water. The casting solution generally will contain from 15 to 30 wt. % aromatic polyamide. The casting solution also contains a modifying salt. Suitable modifying

salts include lithium nitrate, lithium chloride and hydrated magnesium chloride. The modifying salt should be present in an amount of from 20-60 wt %, based on the aromatic polyamide.

If a fabric support is used in forming aromatic cast membrane for use in the process of the present invention, it generally will be a woven or non-woven unsized polyester or aromatic polyamide fabric. Suitable polyesters are disclosed in Whinfield, U.S. 2,465,319. Suitable aromatic polyamides are disclosed in Sweeny, U.S. 3,287,324.

Generally, the aromatic polyamide solution is cast or extruded at from 0° to 125°C and preferably 15° to 35°C. The range of 15° to 35°C represents ambient temperature and is preferred because of simplicity. The pre-membrane as extruded generally will have a thickness of from 1 to 10 mils, ($2.5 \times 10^{-5}$m - $2.5 \times 10^{-4}$m). After being cast or extruded the pre-membrane is partially dried. The drying is done at 50° to 170°C with from 80 to 150°C being preferred. The drying should be done to the extent necessary to leave from 30 to 50 wt. % aromatic polyamide in the pre-membrane.

After the partial drying step, the pre-membrane is quenched with water. The quench water should be at from 0° to 30°C. and preferably 10° to 25°C. Generally, the quenching step will last one or two minutes. While longer quench times can be used they offer no improvement over the quench effect obtained after a few minutes. In fact the membrane is normally stored in water at ambient temperature until it is dried. The quench step serves to gel the polymer and freeze in its structure as well as to extract residual solvent and modifying salt.

The membranes of the present invention are from 1 to 10 mils ($2.54 \times 10^{-5}$m - $2.54 \times 10^{-4}$m) in thickness and have densities of from 0.5 to 0.8 g/cc.

The membranes of the present invention are anisotropic. That is they are denser on the side from which the solvent has been evaporated during their preparation. This anisotropic nature can be determined using a scanning electron micrograph or a transmission electron micrograph.

The membranes of the present invention can be flat films or tubular in nature. Tubular membranes are formed by casting the aromatic dope on a preformed tubular support followed by performing the remaining process steps disclosed herein.

Simply drying the membrane by evaporating the water associated therewith has a deleterious effect on the gas separation properties of the membrane. Thus the membrane should be dried by a technique other than simply evaporating the water. Generally this is done by replacing the water with an organic liquid while maintaining both the water and the organic liquid in the liquid phase. Such techniques are taught in U.S. 4,080,743, U.S. 4,080,744 and U.S. 4,120,098. The organic liquid is generally removed from the membrane by evaporation, but need not be if it is compatible with the solvent used to apply the cationic agent to the surface of the membrane.

The surface modified membranes of the present invention are prepared by contacting the dense layer of a dried membrane with a very dilute solution of a suitable cationic agent in a nonpolar, volatile solvent of low surface tension. Unlike prior processes involving pore plugging or coatings

of membranes with nonreactive materials, the current invention relies on the unexpectedly strong affinity of certain cationic agents for nucleophilic sites on the membrane. The bonding appears to be sufficiently strong that a monolayer of the cationic agent is enough to modify permanently the permselective properties of the membrane. The fact that the modification of this invention requires physicochemical interaction between cationic agent and membrane offers the added advantage of elimination of overcoating, regardless of the amount of additive used.

The cationic agents, either monomeric or polymeric, generally have strong affinity for the membranes used in this invention. Practical and performance considerations, however, limit their choice to agents soluble in solvents that will not damage the membrane. Suitable solvents must be nonpolar and must have surface tension below 25 dyn. $cm^{-1}$, preferably below 20 dyn. $cm^{-1}$. Several hydrocarbons, fluorocarbons, fluorochlorocarbons and water-immiscible ethers are satisfactory as solvents. Because of solvent limitations, suitable monomeric or polymeric cationic agents are those having their positively charged function attached to hydrocarbon, halocarbon or ether segments of length necessary to insure complete solubility in the chosen solvent. Examples of such agents include cationic surfactants known by trade names such as Adogens (Ashland), Arquads, Ethoquads (Armak); Zonyls fluoro-surfactants (Du Pont) and several others. These cationic surfactants have the general formula

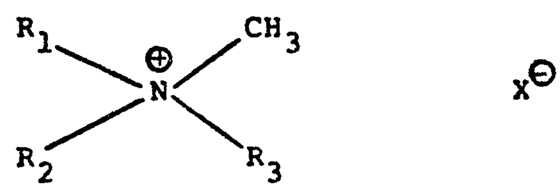

where $-R_1$ is a $C_{10-20}$ alkyl or alkenyl group, $-CH_2CH_2C_nF_{2n+1}$ where n is an integer from 8 to 20, or $\overline{(CH_2\underset{CH_3}{\underset{|}{C}}H-O)}_m$ where m is an integer from 8 to 20 and $-R_2$ and $-R_3$ are $-CH_3$ or $-R_1$, and $X^-$ is $Cl^-$, $Br^-$ or $I^-$.

## Examples

### Example 1

Water-wet hollow fibers from a polyaramide made by polycondensation of m-phenylenediamine with isophthalyl/terephthalyl chlorides (70/30 mixture) were dehydrated by the procedure described in U.S. Patent 4,080,743. The dry fibers, 42 filaments having an outer diameter of ca. 100 μm and inner diameter of 40 μm, were assembled into a minipermeator module having an inlet in communication with the exterior of the fibers and an outlet in communication with the interior of the fibers. The active fiber length was 63 cm. The permeator was tested for carbon dioxide and methane permeabilities by feeding one gas at a time through the permeator shell at 400 psig ($27.6 \times 10^5$ Pa) at 25°C and measuring its output through the tube side as cubic centimeters per second. Measurement of permeate volume involved timing the displacement of a soap bubble in a 10 ml. burette. Following equilibration of outputs, the permeator was removed from the pressure line and its shell was filled with a 0.05% solution of dialkyl ($C_{12}$-$C_{18}$) dimethyl ammonium chloride (cationic surfactant) in Freon® 113 (1,1,2-trichloro-1,2,2-trifluoroethane) (Du Pont). After 15 minute exposure, the fluid was decanted and the permeator shell was rinsed 3 times with Freon® 113 to ascertain removal of unreacted Adogen.

Complete removal of the solvent was achieved by purging the permeator shell with nitrogen. The so treated permeator was retested for carbon dioxide and methane permeabilities as described above. The results in micro-Hoehns before and after treatment are tabulated below:

Permeabilities

| | Before Treatment | After Treatment |
|---|---|---|
| $CO_2$ | 11.54 | 5.53 |
| $CH_4$ | 10.03 | 0.34 |
| $CO_2/CH_4$ selectivity | 1.15 | 16.2 |

A second post-treatment with the cationic surfactant in Freon® 113 did not result in any other change of permeabilities. A microhoehn is the number of cubic centimeters passed by the membrane at standard temperature and pressure times $10^6$ divided by the area of the membrane in square centimeters X the time in seconds X the pressure on the product side of the membrane in mmHg i.e.

$$\text{microhoehn} = \frac{cm^3\ (STP)}{cm^2 . sec\ (cm\ 1^+g) \times 10^6}$$

Example 2

A minipermeator similar to the one described in Example 1 was made using 250 dehydrated hollow fibers each of which is 50 cm long from a polyaramide prepared by polycondensation of m-phenylene diamine (.89 mole) and sulfonated m-phenylene diamine (.11 mole) with the same mixture of diacid chlorides as in Example 1. The permeator was tested for $CO_2$ and $CH_4$ permeabilities, at 400 psig ($27.6 \times 10^5$ Pa) post-treated with 0.05% of the cationic agent used in Example 1 in Freon® 113 and retested exactly as in Example 1. The results reported in cc/sec. are tabulated below:

| Permeabilities | Before Treatment | After Treatment |
|---|---|---|
| $CO_2$ | 6.25 | 3.85 |
| $CH_4$ | 0.96 | 0.11 |
| $CO_2/CH_4$ selectivity | 6.5 | 35 |

Example 3

A permeator similar to the one described in Example 2 was tested for helium and methane permeabilities at 400 psig (27.6 x $10^5$ Pa) before and after identical post-treatment with the cationic surfactant. Results are tabulated below:

| Permeabilities | Before Treatment | After Treatment |
|---|---|---|
| Helium | 29.4 | 15.6 |
| $CH_4$ | 2.94 | 0.034 |
| $He/CH_4$ selectivity | 8.3 | 459 |

Example 4

To differentiate the effect of Freon® 113 from that of the cationic agent three minipermeators were prepared as in Example 2. All three permeators were evaluated for helium and methane permeabilities, as in Example 3, to establish initial performance. Following equilibrium readings (overnight exposure to 400 psig (27.6 x $10^5$ Pa) helium at room temperature). Methane permeabilities were determined to calculate selectivities (2 hours on methane at 400 psig (27.6 x $10^5$ Pa). The permeator shells were then filled up with Freon® 113 (2 permeator) and 0.05 wt. % of the cationic agent used in Example 1 in Freon® 113 (one permeator). After 15 minutes the fluids were decanted and the permeator treated with the cationic agent was filled with plain Freon® 113 to remove any possible excess of the cationic surfactant, then decanted. The permeators were dried

by pressuring the shell with helium and slightly opening the reject opening to establish good sweeping of helium through the permeator. Helium permeabilities were determined again after two hours for equilibrium, followed by methane readings to determine selectivities.

In an extra step one of the permeators that had been treated with Freon® 113 was retreated with the same solvent for 15 minutes, while the second permeator that had been treated with 0.05 wt. % of the cationic agent used in Example 1 in Freon® 113 for 15 minutes then rinsed with Freon® 113 and dried as previously. Helium and methane permeabilities were redetermined. The results are tabulated below (all tests were run at 400 psig; measurements in cc/sec., then converted to micro Hoehns).

| Permeator | Post Treatment | He Permeability cc/sec | He Permeability μHoehn | $CH_4$ Permeability cc/sec | $CH_4$ Permeability μHoehn | He/$CH_4$ Selectivity |
|---|---|---|---|---|---|---|
| 1 | None | 28.6 | 40.4 | 3.5 | 4.92 | 8.2 |
| | Freon® 113 (15 min) | 22.2 | 31.3 | 0.9 | 1.25 | 25 |
| | 2nd Freon® 113 (15 min) | 20.8 | 29.4 | 0.8 | 1.13 | 26 |
| 2 | None | 30.3 | 42.8 | 3.4 | 4.81 | 8.9 |
| | (1) Freon® 113 (15 min) | 22.4 | 31.6 | 0.8 | 1.13 | 28 |
| | (2) 0.05% cationic agent | | | | | |
| | (3) Freon® 113 rinse | 20.8 | 29.4 | 0.05 | 0.07 | 416 |
| 3 | None | 31.8 | 45.0 | 3.5 | 4.94 | 9.1 |
| | (1) 0.05% cationic agent | | | | | |
| | (2) Freon® 113 rinse | 18.9 | 26.7 | 0.04 | 0.056 | 472 |

0179474

Claims:

1. A process for preparing a gas separation membrane comprising treating the dense side of an anisotropic membrane formed of a polymer containing repeating units of the formula ⟨A-B⟩ where -A- is an aromatic moiety of the structure

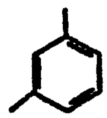 , 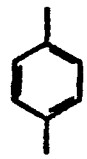 , 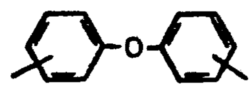

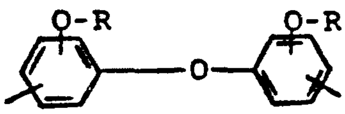 , 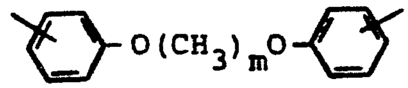

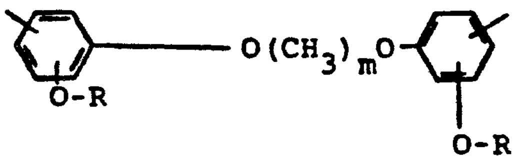 , 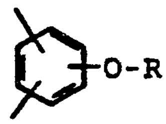

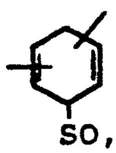 , cation 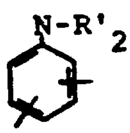 , 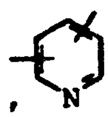 , 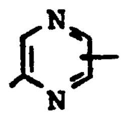 , 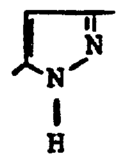

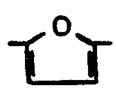 , 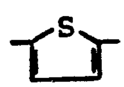 , 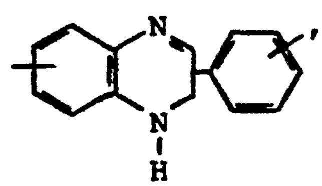 , or

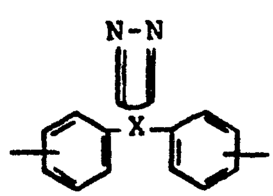

AD-5414-A

0179474

where X is O, S,

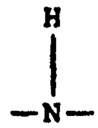

N alkyl, N phenyl and mixtures of the above, -R is an alkyl group containing 1 to 5 carbon atoms, -R' is -H or an alkyl group containing 1 to 5 carbon atoms, and n and m are 1-3; and -B- is a linking group of the structure

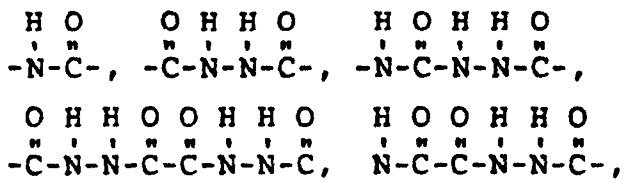

or

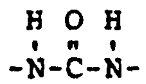

with a dilute solution of a cationic surfactant in a volatile non-polar organic solvent having a surface tension below about 25 dyn. $cm^{-1}$ and removing the organic solvent from the membrane whereby a membrane having an improved selectivity to separating two gases selected from the group consisting of $CO_2$, $CH_4$ and He is produced.

2. The process of Claim 1 wherein the membrane is formed of an aromatic polyamide derived from a 50:50 to 80:20 mixture of isophthalyl chloride and terephthalyl chloride, and meta-phenylenediamine which may be substituted with a sulfonic acid group, said polyamide containing from 0 to 4.5 percent by weight sulfur.

3. The process of Claim 1 wherein the cationic surfactant has the formula

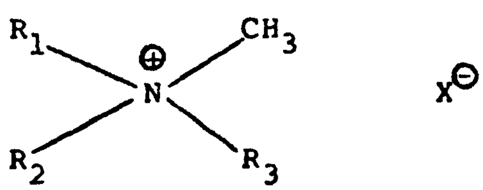

where $-R_1$ is a $C_{10-20}$ alkyl or alkenyl group, $-CH_2CH_2C_nF_{2n+1}$ where n is an integer from 8 to 20, or $(CH_2CH(CH_3)-O)_m$ where m is an integer from 8 to 20 and $-R_2$ and $-R_3$ are $-CH_3$ or $-R_1$, and $X^-$ is $Cl^-$, $Br^-$ or $I^-$.

4. An anisotropic permeation membrane formed of a polymer containing repeating units of the formula ⁅A-B⁆ where -A- is an aromatic moiety of the structure

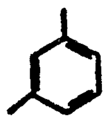 , 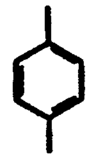 , 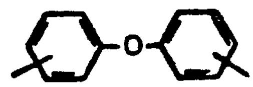

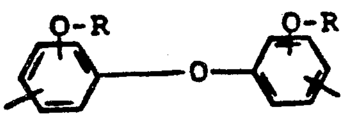 , 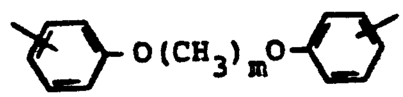

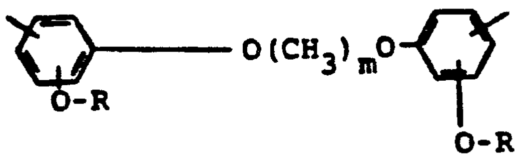 , 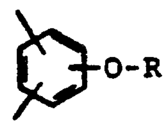

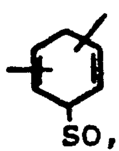 , cation 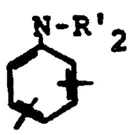 , 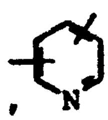 , 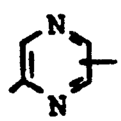 , 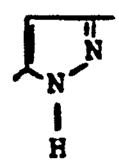

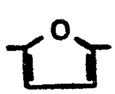 , 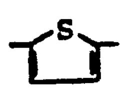 , 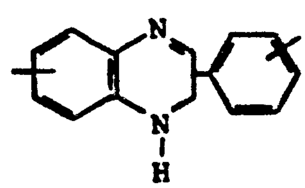 , or

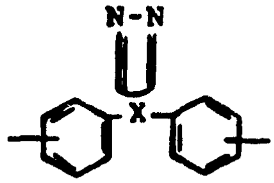

where X is O, S,

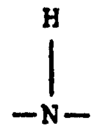

N alkyl, N phenyl and mixtures of the above, -R is an alkyl group containing 1 to 5 carbon atoms, -R' is -H or an alkyl group containing 1 to 5 carbon atoms, and n and m are 1-3; and -B- is a linking group of the structure

H O   O H H O   H O H H O
-N-C-, -C-N-N-C-, -N-C-N-N-C-,

O H H O O H H O   H O O H H O   O H H O H
-C-N-N-C-C-N-N-C, N-C-C-N-N-C-, -C-N-N-C-N-, or

H O H
-N-C-N- having ionically bonded thereto on the dense side a cationic surfactant.

5. The gas permeation membrane of Claim 4 wherein the membrane is formed of an aromatic polyamide derived from a 50:50 to 80:20 mixture of isophthalyl chloride and terephthalyl chloride, and meta-phenylenediamine which may be substituted with a sulfonic acid group, said polyamide containing from 0 to 4.5 percent by weight sulfur.

6. The gas permeation membrane of Claim 5 wherein the cationic surfactant has the formula

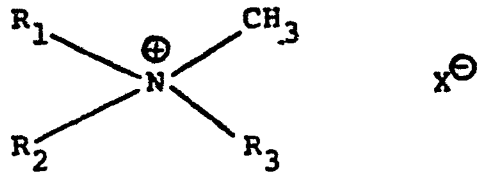

where $-R_1$ is a $C_{10-20}$ alkyl or alkenyl group, $-CH_2CH_2C_nF_{2n+1}$ where n is an integer from 8 to 20, or $\left(CH_2\underset{CH_3}{\underset{|}{CH}}-O\right)_m$ where m is an integer from 8 to 20 and $-R_2$ and $-R_3$ are $-CH_3$ or $-R_1$, and $X^-$ is $Cl^-$, $Br^-$ or $I^-$.